# DEMANDE DE BREVET EUROPEEN

(11) **EP 2 487 074 A1**
(43) Date de publication de la demande: **15.08.2012**
(21) Numéro de dépôt: 12154312.8
(22) Date de dépôt: 07.02.2012
(51) Int. Cl.: B60R 13/02

(54) **Procédé de réalisation d'un panneau de garnissage de véhicule automobile**

(30) Priorité: 11.02.2011 FR 1100441
(71) Demandeur: Centre d'Etude et de Recherche pour l'Automobile (CERA), 51100 Reims (FR)
(72) Inventeur: Brillon, Eric, 51140 Treslon (FR)
(74) Mandataire: Sayettat, Julien Christian

(57) **Abrégé**

L'invention concerne un procédé de réalisation d'un panneau (1) de garnissage de véhicule automobile comprenant les étapes suivantes :
• réaliser une âme (2),
• associer une bande de finition (8,11) sur au moins une partie de la périphérie de ladite âme,
• coller sur les faces supérieure (3) et inférieure (4) de ladite âme une couche de matériau de revêtement (5,6) respective, lesdites couches empiétant chacune le long de ladite bande, lesdites couches étant en outre collées l'une contre l'autre en leur périphérie pour former une bavette,
• couper ladite bavette de manière à définir une ligne (7) de jonction entre lesdites couches.

## Description

L'invention a pour objet un procédé de réalisation d'un panneau de garnissage de véhicule automobile et un panneau réalisé par mise en oeuvre d'un tel procédé.

Il est connu de réaliser un panneau de garnissage de véhicule automobile - notamment une tablette de recouvrement d'un compartiment à bagages -, ledit panneau comprenant une âme structurelle - notamment en polyuréthanne rigide expansé -, ladite âme comprenant une face supérieure et une face inférieure revêtues respectivement d'une couche supérieure et inférieure de matériau de revêtement - lesdites couches étant notamment collées à ladite âme -, lesdites couches se rejoignant selon une ligne de jonction sur moins une partie de la périphérie de l'âme.

Les couches de matériau de revêtement peuvent en outre :
- être découpées selon ladite ligne, de façon à être disposées bord contre bord, ce qui implique un risque de mauvaise jonction desdites couches entre elles, voire de décollement desdites couches le long de ladite ligne laissant apparaître l'âme, ce qui est inesthétique,
- former au delà de ladite ligne une bavette qui est soit laissée saillante, ce qui est peu esthétique dans les parties visibles du panneau, soit repliée et collée en dessous dudit panneau pour réaliser sa finition périphérique, ce qui peut s'avérer complexe et peu esthétique dans les angles dudit panneau.

L'invention a pour but de pallier ces inconvénients.

A cet effet et selon un premier aspect, l'invention propose un procédé de réalisation d'un panneau de garnissage de véhicule automobile comprenant les étapes suivantes :
- réaliser une âme,
- associer une bande de finition sur au moins une partie de la périphérie de ladite âme,
- coller sur les faces supérieure et inférieure de ladite âme une couche de matériau de revêtement respective, lesdites couches empiétant chacune le long de ladite bande, lesdites couches étant en outre collées l'une contre l'autre en leur périphérie pour former une bavette,
- couper ladite bavette de manière à définir une ligne de jonction entre lesdites couches.

Selon un deuxième aspect, l'invention propose un panneau de garnissage de véhicule automobile réalisé par mise en oeuvre d'un tel procédé.

La description qui suit sera faite en relation avec les figures jointes dans lesquelles :
- la figure 1 est une représentation schématique en coupe partielle d'un panneau selon une première réalisation,
- la figure 2 est une représentation schématique en coupe partielle d'un panneau selon une deuxième réalisation, avant (figure 2a) et après (2b) découpe de finition périphérique.

On décrit à présent un panneau 1 de garnissage de véhicule automobile - notamment une tablette de recouvrement d'un compartiment à bagages -, ledit panneau comprenant une âme 2 structurelle - notamment en polyuréthanne rigide expansé -, ladite âme comprenant une face supérieure 3 et une face inférieure 4 revêtues respectivement d'une couche supérieure 5 - par exemple à base d'aiguilleté ou de textile - et inférieure 6 - notamment à base de non tissé - de matériau de revêtement - lesdites couches étant notamment associées à ladite âme par collage -, lesdites couches se rejoignant bord contre bord selon une ligne 7 de jonction sur au moins une partie de la périphérie de ladite âme, ledit panneau comprenant en outre une bande 8,11 de finition périphérique disposée entre ladite âme et lesdites couches le long et de part et d'autre de ladite ligne de jonction.

La présence de la bande 8,11 de finition périphérique permet un masquage de l'âme 2 en cas de jonction imparfaite entre les bords des couches 5,6 ou de décollement desdites couches le long de la ligne 7.

On peut prévoir qu'une partie de la périphérie du panneau 1 fasse l'objet, notamment en zones non visibles, d'une finition autre, notamment sous forme de bavette repliée ou non.

Selon une réalisation, la bande 8, 11 peut présenter une couleur analogue à celle des couches 5,6, de manière à optimiser le masquage de l'âme 2 en cas de jonction imparfaite entre les bords desdites couches ou de décollement desdites couches le long de la ligne 7.

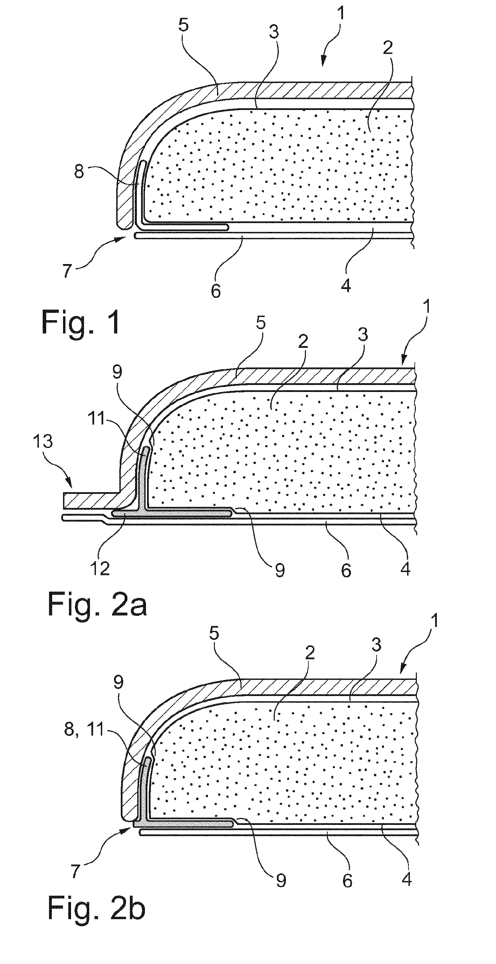

Selon la réalisation de la figure 1, la bande 8 de finition est à base de matériau analogue - en particulier en texture et en couleur - à celui de la couche inférieure 6, qui est en particulier un non tissé.

Ainsi, une jonction imparfaite entre les couches 5,6 ou un décollement tel que décrit avant ne prêtent pas à conséquence puisque la bande 8 vient en prolongement de la couche inférieure 6 pour masquer l'âme 2.

Selon la réalisation de la figure 2, la bande de finition est un profilé 11 à base de matériau thermoplastique disposé en périphérie de l'âme 2.

Le profilé 11 peut être notamment obtenu par moulage par injection, ce qui permet de lui conférer une forme correspondant à la géométrie de la périphérie de l'âme 2 lorsqu'elle n'est pas rectiligne.

En particulier, on peut prévoir de disposer une pluralité de profilés 11 pour réaliser une finition sur plusieurs côtés de l'âme 2.

L'âme 2 présente ici un palier 9 agencé pour que le profilé 11 soit dans la continuité d'au moins la face supérieure 3 de ladite âme, et ici des deux faces 3,4.

On décrit à présent un procédé de réalisation du panneau 1 de la figure 1, ledit procédé comprenant les étapes suivantes :
- réaliser une âme 2, notamment par moulage,
- associer - notamment par collage ou surmoulage - une bande 8 de matériau analogue à celui de la couche inférieure 6 sur au moins une partie de sa périphérie,
- coller sur ses faces supérieure 3 et inférieure 4 une couche de matériau de revêtement 5,6 respective, lesdites couches empiétant chacune le long de ladite bande et étant collées sur ladite bande et l'une contre l'autre en leur périphérie pour former une bavette,
- couper ladite bavette au ras de ladite bande de manière à définir une ligne 7 de jonction entre lesdites couches.

On décrit ci-après un procédé de réalisation du panneau 1 de la figure 2, ledit procédé comprenant les étapes suivantes :
- réaliser une âme 2, notamment par moulage,
- associer - notamment par emboitement ou surmoulage - un profilé 11 à base de matériau thermoplastique en périphérie de ladite âme, ledit profilé étant pourvu d'une lame 12 continue saillant vers l'extérieur,
- coller sur ses faces supérieure 3 et inférieure 4 une couche de matériau de revêtement 5,6 respective, lesdites couches empiétant chacune le long dudit profilé en recouvrant respectivement de part et d'autre ladite lame, et étant collées l'une contre l'autre en leur périphérie pour former une bavette 13,
- couper, notamment à température de fusion dudit profilé, ladite bavette au ras de ladite lame de manière à ôter ladite lame et à définir une ligne 7 de jonction entre lesdites couches.

Le fait de faire la découpe à chaud permet d'opérer une fusion du profilé 11 au niveau de la ligne 7, les bords des couches 5,6 se retrouvant soudés au niveau de ladite ligne par le matériau thermoplastique constitutif dudit profilé.

Exprimé de façon plus synthétique, le procédé comprend les étapes suivantes :
- réaliser une âme 2,
- associer une bande de finition 8,11 sur au moins une partie de la périphérie de ladite âme,
- coller sur les faces supérieure 3 et inférieure 4 de ladite âme une couche de matériau de revêtement 5,6 respective, lesdites couches empiétant chacune le long de ladite bande, lesdites couches étant en outre collées l'une contre l'autre en leur périphérie pour former une bavette,
- couper ladite bavette de manière à définir une ligne 7 de jonction entre lesdites couches.

Selon la réalisation de la figure 1, la bande 8 est en matériau analogue à celui de la couche inférieure 6, les couches 5,6 étant collées sur ladite bande.

Selon la réalisation des figures 2, la bande est un profilé 11 à base de matériau thermoplastique pourvu d'une lame 12 continue saillant vers l'extérieur, les couches 5,6 empiétant chacune le long dudit profilé en recouvrant respectivement de part et d'autre ladite lame.

La découpe de la bavette 13 est réalisée à température de fusion du profilé 11.

Formulé encore autrement, le procédé comprend les étapes suivantes :
- réaliser une âme 2,
- associer sur au moins une partie de la périphérie de ladite âme une bande 8 de matériau analogue à celui de la couche inférieure 6 ou un profilé 11 à base de matériau thermoplastique, ledit profilé étant pourvu d'une lame 12 continue saillant vers l'extérieur,
- coller sur les faces supérieure 3 et inférieure 4 de ladite âme une couche de matériau de revêtement 5,6 respective, lesdites couches empiétant chacune le long de ladite bande ou dudit profilé et étant collées sur ladite bande ou empiétant chacune le long dudit profilé en recouvrant respectivement de part et d'autre ladite lame, lesdites couches étant en outre collées l'une contre l'autre en leur périphérie pour former une bavette,
- couper ladite bavette au ras de ladite bande ou de ladite lame de façon à ôter ladite lame, de manière à définir une ligne 7 de jonction entre lesdites couches.

## Revendications

1. Procédé de réalisation d'un panneau (1) de garnissage de véhicule automobile **caractérisé en ce qu'**il comprend les étapes suivantes :
• réaliser une âme (2),
• associer une bande de finition (8,11) sur au moins une partie de la périphérie de ladite âme,
• coller sur les faces supérieure (3) et inférieure (4) de ladite âme une couche de matériau de revêtement (5,6) respective, lesdites couches empiétant chacune le long de ladite bande, lesdites couches étant en outre collées l'une contre l'autre en leur périphérie pour former une bavette,
• couper ladite bavette de manière à définir une ligne (7) de jonction entre lesdites couches.

2. Procédé de réalisation d'un panneau (1) selon la revendication 1, **caractérisé en ce que** la bande (8) est en matériau analogue à celui de la couche inférieure (6), les couches (5,6) étant collées sur ladite bande.

3. Procédé de réalisation d'un panneau (1) selon la revendication 1, **caractérisé en ce que** la bande (8) est un profilé (11) à base de matériau thermoplastique pourvu d'une lame (12) continue saillant vers l'extérieur, les couches (5,6) empiétant chacune le long dudit profilé en recouvrant respectivement de part et d'autre ladite lame.

4. Procédé de réalisation d'un panneau (1) selon la revendication 3, **caractérisé en ce que** la découpe de la bavette (13) est réalisée à température de fusion du profilé (11).

5. Panneau (1) de garnissage de véhicule automobile réalisé par un procédé selon l'une quelconque des revendications 1 à 4, ledit panneau comprenant une âme (2) structurelle, ladite âme comprenant une face supérieure (3) et une face inférieure (4) revêtues respectivement d'une couche supérieure (5) et inférieure (6) de matériau de revêtement, lesdites couches se rejoignant bord contre bord selon une ligne (7) de jonction sur au moins une partie de la périphérie de ladite âme, ledit panneau étant **caractérisé en ce qu'**il comprend en outre une bande (8) de finition périphérique, ladite bande étant disposée entre ladite âme et lesdites couches le long et de part et d'autre de ladite ligne de jonction.

6. Panneau selon la revendication 5, **caractérisé en ce que** la bande (8) est à base de matériau analogue à celui de la couche inférieure (6).

7. Panneau selon la revendication 5, **caractérisé en ce que** la bande (8) est un profilé (11) à base de matériau thermoplastique disposé en périphérie de l'âme (2).

8. Panneau selon la revendication 7, **caractérisé en ce que** l'âme (2) présente un palier (9) agencé pour que le profilé (11) soit dans la continuité d'au moins la face supérieure (3) de ladite âme.
